# EUROPÄISCHE PATENTSCHRIFT

(11) **EP 1 835 186 B1**
(45) Veröffentlichungstag und Bekanntmachung des Hinweises auf die Patenterteilung: **21.04.2010**
(21) Anmeldenummer: 06012089.6
(22) Anmeldetag: 13.06.2006
(51) Int. Cl.: F16B 47/00, F16B 11/00, B32B 27/30, B32B 27/40, B29C 41/20

(54) **Adapterplatte für einen Vakuumsauger**
Adaptation plate for a suction cup
Plaque d'adaptation pour une ventouse

(30) Priorität: 14.03.2006 DE 202006004193 U
(43) Veröffentlichungstag der Anmeldung: 19.09.2007
(73) Patentinhaber: Richter, Harald, 75331 Engelsbrand (DE)
(72) Erfinder: Richter, Harald, 75331 Engelsbrand (DE)
(74) Vertreter: Gallo, Wolfgang

(56) Entgegenhaltungen:
- DE-A1- 19 741 593
- FR-A- 1 373 506
- GB-A- 843 380
- US-A- 4 310 137
- US-A- 4 654 099
- US-A- 5 133 524
- US-A- 5 275 367
- US-A- 5 996 950

## Beschreibung

Die Erfindung betrifft eine Adapterplatte für einen Vakuumsauger, d. h. eine Adapterplatte, die an einer zur direkten Anbringung eines Vakuumsaugers beispielsweise wegen Rauhigkeit oder Profilierung der Oberfläche, nicht geeigneten Anbringungsfläche durch Ankleben befestigbar ist, um eine zum Anbringen eines Vakuumsaugers geeignete glatte Fläche herzustellen.

Aus der EP 0 844 406 ist eine solche Adapterplatte bekannt, die rückseitig selbstklebend ausgebildet ist und frontseitig eine ebene glatte Fläche aufweist, die von einem aufstehenden Rand umgeben und im Durchmesser etwas größer als der Saugfuß bzw. die Saugmembran eines anzubringenden Vakuumsaugers ist.

Aufgabe der Erfindung ist eine weitere Verbesserung der bekannten Adapterplatte für eine vielfältigere Einsetzbarkeit und bessere Funktion.

Diese Aufgabe wird gemäß der Erfindung durch die im Anspruch 1 angegebene Adapterplatte gelöst.

Die erfindungsgemäße Adapterplatte hat keinen aufstehenden Rand und ist vorzugsweise so ausgebildet, daß sie sowohl eine zylindrische oder wie auch sphärische Wölbung ohne Faltenbildung und damit eine Anbringung an Flächen im Armaturenbrett- oder Mittelkonsolenbereich von Autos auch dann ermöglicht, wenn solche Flächen gewölbt sind. Die herkömmliche Adapterplatte kann eine Adapterfunktion an solchen Flächen nicht leisten. Die gegossene Oberschicht der erfindungsgemäßen Adapterplatte ermöglicht eine bessere Haltefunktion eines Saugfußes und gibt vielfältige Optionen für die optische Gestaltung.

Ein Ausführungsbeispiel der Erfindung nachstehend unter Bezugnahme auf die anliegenden schematischen Zeichnungen mehr im einzelnen beschrieben. In den Zeichnungen zeigt:
- Figur 1: eine Draufsicht auf eine Adapterplatte nach der Erfindung,
- Figur 2: eine Seitenansicht der Adapterplatte nach Figur 1, und
- Figur 3: als vergrößerte Einzelheit den Randbereich der Adapterplatte.

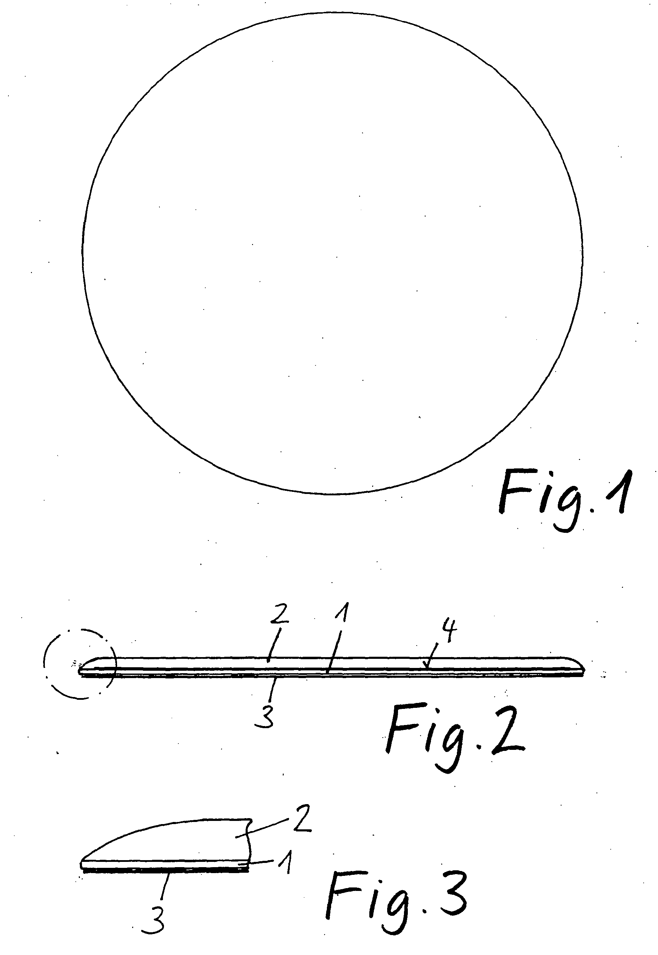

Die dargestellte Adapterplatte hat einen zweischichtigen Aufbau, wie aus Figur 2 hervorgeht. Sie besteht aus einer relativ dünnen Unterschicht 1 aus PVC, die aus einer PVC-Folie gefertigt ist. Weiter besteht die Adapterplatte aus einer relativ dicken gegossenen Oberschicht 2 aus Polyurethan, die auf die die Unterschicht 1 bildende PVC-Folie aufgebracht worden ist.

Das Verfahren zur Herstellung der Adapterplatte umfasst zunächst das Stanzen bzw. Schneiden der PVC-Folie zur Herstellung der Unterschicht 1, und sodann das Aufbringen von Polyurethan in flüssigem Zustand auf die PVC-Folie. Die aufgebrachte Menge an flüssigem Polyurethan wird so dosiert, daß die Flüssigkeitsschicht nicht über den Rand der PVC-Folie herabläuft, sondern aufgrund der Oberflächenspannung wie ein großer flacher Tropfen auf der PVC-Folie liegen bleibt. Dadurch ergibt sich von selbst eine sanft gerundete Randkante der Polyurethanschicht nach dem Abbinden bzw. Aushärten des Polyurethans. Diese Randkante, die sowohl optisch als auch technisch sehr vorteilhaft ist, ist in Figur 3 dargestellt.

Auf die Unterseite der Unterschicht 1 wird sodann eine Klebeschicht 3 aus einem geeigneten Spezialkleber aufgebracht, um die Adapterplatte selbstklebend zu machen. Diese wird dann in üblicher Weise durch eine Abziehfolie oder dergleichen abgedeckt.

Die Oberseite der PVC-Folie kann vor dem Aufbringen der Oberschicht 2 mit einer dekorativen Bedruckung 4 versehen werden, die dann durch die glasklare oder transparente Oberschicht sichtbar ist. Dieser dekorative Aufdruck kann irgendein beliebiges Dekorationsmuster oder beispielsweise eine Holzimitation sein.

Die Oberschicht 2 aus Polyurethan ist nach dem Aushärten zwar fest, aber im Vergleich beispielsweise zu Hartplastik-Kunststoff relativ weich. Dies hat nicht nur den Vorteil, daß eine Wölbbarkeit der Adapterplatte zur Anpassung an Rundungen oder Krümmungen der Anbringungsfläche gegeben ist, sondern dadurch wird gegenüber der herkömmlichen Adapterplatte, die aus hartem Kunststoff besteht, eine wesentlich gesteigerte Haftung eines daran angebrachten Saugfußes ermöglicht, da die relativ weiche Oberschicht 2 mit der ebenfalls relativ weichen Saugermembran zusammenwirkt. Durch dieses Zusammenwirken einer relativ weichen Saugermembran und der relativ weichen Oberschicht 2 der Adapterplatte wird eine unwahrscheinlich gute Saugerhaftung erreicht.

Die bekannte Adapterplatte weist einen aufstehenden Rand auf, der als Positionierhilfe und Führung beim Ansetzen des Saugfußes dient und verhindern soll, daß der Saugfuß seitlich von der Adapterplatte abgleitet. Bei der erfindungsgemäßen Adapterplatte erzeugt, wie oben schon gesagt, die auf die Unterschicht aufgegossene und dann ausgehärtete Oberschicht eine sanfte allmähliche Rundung am Rand der Adapterplatte, was bewirkt, daß ein aufgesetzter Saugfuß auch dann, wenn er sich am Randbereich befindet, durch das gegenseitige Anschmiegen von Saugermembran und relativ weicher Oberschicht fest haften bleibt.

Als Materialien des Ausführungsbeispiels wurden PVC-Folie für die Unterschicht 1 und Polyurethan für die aufgegossene und nach dem Aufgießen abgebundene Oberschicht 2 genannt. Es versteht sich, daß andere Kunststoffmaterialien mit gleichen oder ähnlichen Eigenschaften, die sich ebenfalls als geeignet erweisen könnten, in gleicher Weise benutzt werden können.

Statt der oben erwähnten dekorativen Bedruckung der Oberseite der Unterschicht ist es auch möglich, Firmenzeichen oder Markenzeichen aufzudrucken oder einfach in Gestalt eines Etiketts aufzukleben, das dann nach dem Aufgießen der Oberschicht und deren Abbinden von dieser eingeschlossen und versiegelt wird.

Das vorstehend beschriebene Ausführungsbeispiel verkörpert eine flexible Adapterplatte. Abweichend davon ist es, wenngleich auch weniger vorteilhaft, grundsätzlich möglich, ein anderes, auch steifes und dickeres Material als Unterschicht zu verwenden, wie beispielsweise Holz, Metallblech oder ein starrer Kunststoff, worauf dann die Oberschicht gegossen wird. Man erreicht dann zwar den Vorteil der weitaus besseren Haftung eines Saugfußes auf der Adapterplatte, jedoch ist deren Anbringbarkeit dann, wie bei der herkömmlichen Adapterplatte, auf ebene Flächen beschränkt.

## Patentansprüche

1. Flexible, an gewölbten Flächen anbringbare Adapterplatte für einen Vakuumsauger, bestehend aus einer relativ dünnen Unterschicht (1) aus einer dünnen Kunststofffolie und einer darauf gegossenen und abgebundenen oder ausgehärteten, relativ dicken Oberschicht (2) in Gestalt einen großen flachen Tropfens mit sanft gerundeter Randkante, und mit einer Selbstklebeschicht (3) an der Unterseite.

2. Adapterplatte nach Anspruch 1, wobei die Oberschicht (2) aus Polyurethan besteht.

3. Adapterplatte nach Anspruch 1 oder 2, wobei die Oberseite der Unterschicht (1) mit einer dekorativen Bedruckung, Profilierung, oder einem aufgebrachten und von der aufgegossenen Oberschicht (2) eingekapselten Etikett oder ähnlichen Element teilweise oder ganz bedeckt ist.

4. Adapterplatte nach einem der Ansprüche 1 bis 3, wobei die Oberschicht (2) transparent oder glasklar ist.

## Claims

1. Flexible adaptation plate for a vacuum suction cup, the plate being attachable to arched surfaces and consisting of a relatively thin bottom layer (1) made of a thin plastics foil, and a relatively thick top layer (2) moulded and set or cured thereon in the form of a large flat drop with a smoothly rounded peripheral edge, and having a self-adhesive layer (3) on the lower side.

2. Adaptation plate according to claim 1, wherein the top layer (2) is made of polyurethane.

3. Adaptation plate according to claim 1 or 2, wherein the upper side of the bottom layer (1) is partly or wholly covered with a decorative printing, profiling, or a label or a similar element applied thereto and encapsulated by the moulded-on top layer (2).

4. Adaptation plate according to any one of claims 1 to 3, wherein the top layer (2) is transparent or glass-clear.

## Revendications

1. Plaque d'adaptation souple pour une ventouse, apte à être placée sur des surfaces bombées, comprenant une couche inférieure (1) relativement mince réalisée dans une feuille en matière plastique mince et une couche supérieure (2) relativement épaisse, coulée sur cette dernière et prise ou durcie, ayant la forme d'une grosse goutte plate avec bord doucement arrondi, et avec une couche autoadhésive (3) sur la face inférieure.

2. Plaque d'adaptation selon la revendication 1, la couche supérieure (2) étant en polyuréthane.

3. Plaque d'adaptation selon la revendication 1 ou la revendication 2, la face supérieure de la couche inférieure (1) étant recouverte partiellement ou totalement par une impression ou une sculpture décorative ou par une étiquette ou élément similaire appliqué et scellé par la couche supérieure (2) coulée dessus.

4. Plaque d'adaptation selon l'une des revendications 1 à 3, la couche supérieure (2) étant translucide ou transparente.
